Europäisches Patentamt

**European Patent Office**

Office européen des brevets

(19)

(11) Veröffentlichungsnummer : **0 216 370**
**B1**

(12)

# EUROPÄISCHE PATENTSCHRIFT

(45) Veröffentlichungstag der Patentschrift :
17.05.89

(21) Anmeldenummer : 86113142.3

(22) Anmeldetag : 24.09.86

(51) Int. Cl.⁴ : **B 61 G 11/12, B 61 G 11/14,**
**B 62 D 53/00, B 62 D 47/02,**
**B 60 D 5/00, B 61 D 17/22**

(54) **Vorrichtung zur Übertragung der Längskräfte zwischen einzelnen Gliedern eines Gelenkfahrzeuges.**

(30) Priorität : 24.09.85 DE 3533959

(43) Veröffentlichungstag der Anmeldung :
01.04.87 Patentblatt 87/14

(45) Bekanntmachung des Hinweises auf die Patenterteilung : 17.05.89 Patentblatt 89/20

(84) Benannte Vertragsstaaten :
AT BE CH DE FR GB LI NL SE

(56) Entgegenhaltungen :
EP–A– 0 067 944
FR–A– 2 552 044
GB–A– 28 170
GB–A– 737 974
US–A– 3 399 632
US–A– 3 996 859

(73) Patentinhaber : HÜBNER Gummi- und Kunststoff
GmbH
Agathofstrasse 15
D-3500 Kassel-Bettenhausen 1 (DE)

(72) Erfinder : Schmidt, Helmbrecht, Dipl.-Ing.
Eichwaldstrasse 8a
D-3501 Niestetal-Sandershausen (DE)

(74) Vertreter : Walter, Helmut
Aubingerstrasse 81
D-8000 München 60 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Beschreibung

Insbesondere bei Schienengelenkfahrzeugen ist es allgemein üblich, die einzelnen Glieder des Fahrzeuges etwa in Fußbodenhöhe durch eine mittlere Kupplung miteinander zu kuppeln, die Zugkräfte zwischen den einzelnen Fahrzeuggliedern überträgt. Die Übertragung der ebenfalls auftretenden Druckkräfte erfolgt durch die zur sogenannten Mittelpufferkupplung ausgebaute Kupplung oder durch seitliche Puffer, die mit tragenden Teilen der Fahrzeugglieder verbunden und in sich begrenzt federnd nachgiebig sind. Durch den Kupplungen zugeordnete Stellglieder bzw. deren Einstellung wird sichergestellt, daß Kupplungsspiel und Pufferspiel zweckmaessig aufeinander abgestimmt sind und insbesondere die Puffer stets, allenfalls mit unterschiedlichen, Federkräften in Anlage aneinander gehalten sind.

Desweiteren ist es insbesondere bei Schienengelenkfahrzeugen, die der Personenbeförderung dienen, allgemein üblich, zwischen den einzelnen Fahrzeuggliedern Übergangsbrücken vorzusehen, die es Personen gestatten, jederzeit direkt vom einen zu einem anderen Fahrzeugglied überzuwechseln.

Schließlich ist es insbesondere bei Schienenfahrzeugen, die der Personenbeförderung dienen, allgemein üblich, die Übergangsbrücken mit Übergangsschutzeinrichtungen zu umgeben, die es den Personen gestatten, jederzeit von Wetterunbilden geschützt, direkt von einem zum anderen Fahrzeugglied überzuwechseln. Die Übergangsschutzeinrichtungen sind insbesondere Faltenbälge oder Gummiwülste.

Diesem Stand der Technik trägt der Gattungsbegriff des Anspruches 1 Rechnung. Bei den üblichen Vorrichtungen mit allen diesen Baugruppen handelt es sich zwar um eine zuverlässige, aber vielteilige Lösung, deren betriebliche Handhabung entsprechend aufwendig ist. Der Nachteil der aufwendigen Handhabung ist besonders dann im negativen Sinne hoch zu veranschlagen, wenn die Zusammenstellung einer Zuggarnitur relativ häufig zu wechseln ist, wie es beispielsweise bei Ferienzügen mit einer relativ großen Anzahl von Kurswagen der Fall ist. Obwohl deshalb das Bedürfnis nach einer einfacheren Lösung insbesondere auch wegen der immer kürzer kalkulierten Haltezeiten vor allem bei Fernreisezügen mit zumindest streckenweise zahlreichen Haltepunkten groß ist und seit langem besteht, hat sich am grundsätzlichen Aufbau in den Übergangsbereichen von Gelenkzügen grundsätzlich nichts geändert. Eine wesentliche vorteilhafte Veränderung aus den nachfolgend angegebenen Gründen bringt demgegenüber die Erfindung, deren wesentlichen Merkmale sich aus dem Kennzeichnungsteil des Anspruches 1 ergeben.

Bei der Erfindung kann eine an sich einfache Kupplungsvorrichtung zwischen je zwei Fahrzeuggliedern Anwendung finden, die relativ einfach ist, weil sie nur Zugkräfte übertragen muß und wie sie zwar bisher schon Anwendung findet, aber in Verbindung mit seitlichen Puffern zur Übertragung von Druckkräften. Puffer zur Übertragung der Druckkräfte finden nun zwar auch bei der Erfindung Anwendung, diese übernehmen aber gleichzeitig die Aufgabe der zumindest seitlichen Abdeckung der Übergangsbrücke, wozu bei den bekannten Vorrichtungen separate Übergangsschutzeinrichtungen in der Form von Faltenbälgen oder Gummiwülsten Anwendung finden. Die Erfindung faßt also die Funktion von Faltenbälgen und Puffern zusammen, insbesondere, wenn nicht nur die erfindungsgemäß vorzusehenden seitlichen Leisten vorgesehen sind, sondern auch noch obere und vorzugsweise entsprechende untere Leisten. In diesem Fall ist, wie bei Faltenbälgen, um den Übergang herum eine geschlossene Röhre angeordnet, die ein Überwechseln von einem zu einem anderen Fahrzeugglied von Wetterunbilden absolut unbeeinträchtigt zuläßt. Andererseits ist es natürlich nicht ohne weiteres möglich, Übergangsschutzeinrichtungen bisheriger Art ohne weiteres auch die Funktion von Puffern zur Übertragung von Druckkräften zu übertragen, bei bisherigen Lösungen also die seitlichen Puffer einfach wegzulassen. Angesichts des Vorteiles, den der Verzicht auf besondere Puffer mit sich bringt, ist aber der Mehraufwand, der für die Übergangschutzeinrichtungen betrieben werden muß, um die Pufferfunktion übernehmen zu können, relativ gering, weil ja die in einem Zugverband zu übernehmenden Druckkräfte sich auf den gesamten Umfang jeder Wagenstirnseite, also auf eine Übergangsschutzeinrichtung großer Fläche verteilen, sich also die örtlichen Beanspruchung in Grenzen hält. Wesentlich ist im Grunde genommen, daß die zusamenwirkenden Flächen zweier Leisten an den einander zugekehrten Stirnseiten zweier Fahrzeugglieder so abriebfest sind, daß sie sich auch unter dem Einfluß von den Anpreßdruck erhöhenden Druckkräften in Fahrzeuglängsrichtung relativ zueinander bewegen können, wie es mit Rücksicht auf die Bewegungen der Fahrzeugglieder relativ zueinander notwendig ist, wenn die innere Verformung der Leisten nicht zu groß werden soll, ohne daß die Stirnflächen der Leisten unwirtschaftlich hohen Verschleiß unterworfen sind. Dies ist jedoch angesichts des heutigen Standes bei der Entwicklung von Materialien mit hoher Verschleißwiderstandsfähigkeit und guten Gleiteigenschaften möglich.

Bei entsprechend geringen oder im wesentlichen gleichbleibenden Betriebsbedingungen kann die angestrebte Wirkung bereits mit Leisten erzielt werden, die nach der Art ungeregelter Gasfedern ausgebildet sind, indem die Leisten Hohlprofile sind, wobei sie vorzugsweise aus einer elastischen Haut bestehen, die einen Gasraum mit konstanter, vorbestimmter Gasfüllung umschließt. Der Druck im Gasraum ist dabei so bestimmbar, daß der Fahrzeuglauf ausreichend stabilisiert wird, indem Relativbewegungen zwischen einzelnen Fahrzeuggliedern bis zu bestimmten Kräften ausgeschaltet sind, größere Kräfte zu Relativbewegungen führen, die Verformungen der Profile zur Folge haben und noch größere Relativkräfte zwischenden Fahrzeuggliedern zu Relativbewegungen zwischen den Profilen führen. Die in den Profilen gegebenenfalls auftretenden Spannungen wirken als Rückstallkräfte für die Fahrzeugglieder. Unabhängig davon, welche Relativstellung zwei Fahrzeugglieder zueinander einnehmen, ist aber ein geschlossener Tunnel bzw. eine geschlossene Röhre gebildet, die ein von Wetterunbilden Unbeeinträchtigtes Überwechseln von einem zu einem anderen Fahrzeugglied ermöglicht.

Werden an den Wagenlaufkomfort höhere Anforderungen gestellt oder unterliegen die Betriebsverhältnisse größeren Veränderungen, so kann der pneumatische Innendruck der Leisten veränderbar sein, was mit Hilfe bekannter und bewährter Regelorgane ohne weiteres möglich ist.

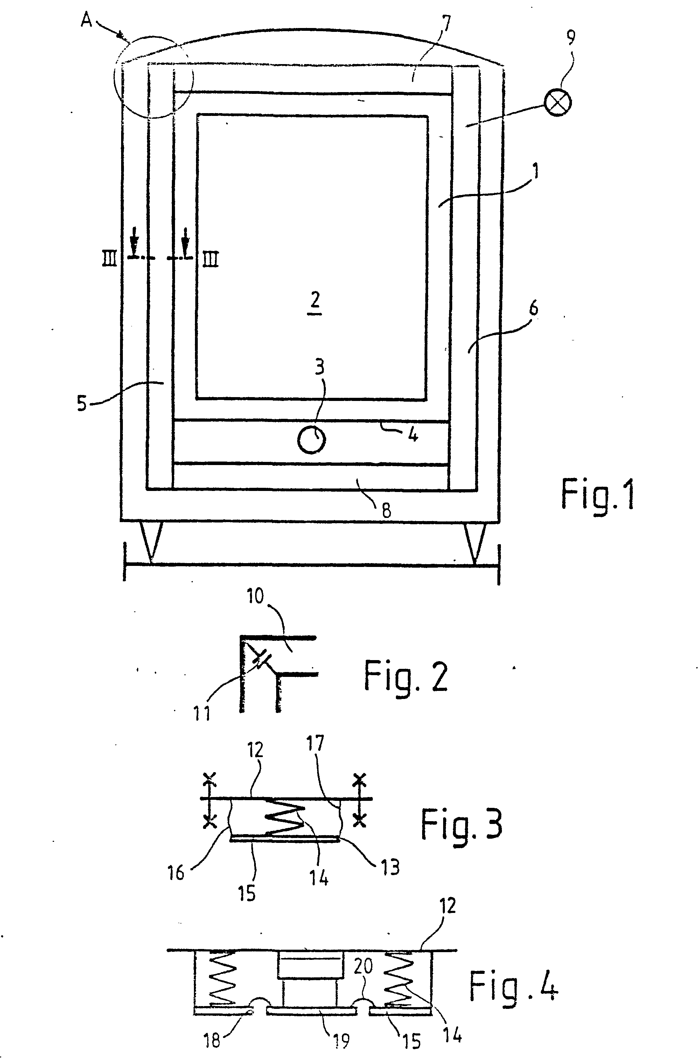

Sehr schematisch ist in der Zeichnung eine erfindungsgemäß ausgestaltete Wagenstirnseite dargestellt (Fig. 1). Fig. 2 zeigt den Bereich A der Fig. 1 im Schnitt, Fig. 3 einen Schnitt nach der Linie III-III in Fig. 1. Fig. 4 zeigt eine erfindungsgemäße Ausgestaltung in einer Fig. 3 entsprechenden Darstellung.

Die Wagenstirnseite ist mit 1 bezeichnet. In ihr ist eine Öffnung 2 angeordnet, die durch eine Tür verschließbar sein kann, andererseits angesichts der Erfindung aber auch wesentlich größer als bei bisherigen Lösungen bemessen sein kann, dabei den Eindruck eines nahezu unbeeinträchtigten Überganges von einem zum anderen Wageninnenraum bei Großraumwagen vermittelt und zur Verstärkung dieses Eindruckes keine Tür aufweist, was angesichts des dichten Aufeinanderliegens der noch zu beschreibenden Wulstanordnung bei allen zu erwartenden Betriebsbedingungen auch ohne weiteres vertretbar ist. Mittels einer Kupplung 3, die allein Zugkräfte überträgt, aber auch eine Zug- und Druckkräfte übertragende Kupplung sein kann, ist der Wagen mit einem folgenden Wagen gelenkig kuppelbar. Die Kupplung ist unter einer Übergangsbrücke 4 angeordnet. Nahe den Außenkanten der Wagenstirnseite sind im Querschnitt etwa rechteckige, hohle und mit einem vorzugsweise pneumatischen Druckmittel gefüllte rohrförmige Bälge 5, 6 (vertikal seitlich) und 7, 8 (horizontal, oben und unten) angeordnet, die mit entsprechenden Teilen des Folgewagens zusammenwirken. Die Kupplung 3 ist unterhalb der Brücke 4, der untere, horizontale Balg 8 ist unterhalb der Kupplung 3 angeordnet. Der Druck in den Bälgen 4 bis 7 ist mittels einer Steuervorrichtung 9 zwangsweise oder automatisch in Abhängigkeit von Betriebsbedingungen regelbar. Die Bälge können miteinander in Verbindung stehen, wobei in die Übergänge 10 zwischen den einzelnen Bälgen Drosseln 11 eingebaut sind, um einen Stabilisierungseffekt zu ergeben, Relativbewegungen zwischen den Wagen aber nicht unmöglich zu machen (Fig. 2).

Stattdessen können die Bälge 5 bis 8 vollständig voneinander getrennt sein, wobei jedem Balg eine der Steuervorrichtung 9 entsprechende Druckregelvorrichtung vorgesehen sein kann, um in jedem Balg den für ihn optimalen Innendruck einzustellen. Auf jeden Fall soll der Innendruck so eingestellt sein, daß der kurveninnerer der vertikalen Bälge 5,6 radial komprimiert werden kann, während der kurvenäußere der vertikalen Bälge 5, 6 radial expandiert, um auch beim Durchfahren engster Kurven das gegenseitige Anliegen zweier Bälge zu gewährleisten und einen dichten Übergang zu haben. In dem kurveninneren Balg baut sich mit dem erhöhten Druck eine Rückstellkraft auf, die das Geraderichten des Zuges beim Ausfahren aus einer Kurve unterstützt. In den oberen und unteren horizontalen Bälgen erfolgt am kurvenäußeren Ende eine Expansion, am kurveninneren Ende eine Kompression, der Umschlagbereich zwischen Expansion und Kompression erfolgt in Balgmitte. Entsprechende Verhältnisse sollen bei der Lösung nach Fig. 2 angestrebt werden, indem Druckmittel gedrosselt aus dem kurveninneren vertikalen Balg durch die horizontalen oberen und unteren Bälge in den kurvenäußeren vertikalen Balg strömt und beim Ausfahren aus einer Kurve das Bestreben einer Rückströmung vorliegt. Horizontale und vertikale Versatzbewegungen zwischen den Wagen werden bis zu einer vorgegebenen Größe durch Verformung der Bälge in sich aufgenommen, Versatzbewegungen ab einer ausgewählten Größe dadurch, daß die Bälge der beiden Wagen gegeneinander gleiten, wozu den Gleitflächen ein abriebfester Belag zugeordnet ist oder die Gleitfläche aus abriebfestem Material bestehen, während bei den übrigen Flächen primär Wert nur auf entsprechend große Elastizität gelegt ist. Zweckmäßig ist es, wenn die Bälge keinen kreisrunden, sondern einen rechteckigen Querschnitt haben, wobei die Flächen mit der größeren Kantenlänge am Wagenkasten befestigt sind bzw. die Flächen sind, die mit abriebfestem Material versehen sind und mit der entsprechenden Gegenfläche des Balges des darauffolgenden Fahrzeuges zusammenwirken. Hierdurch wird auch bei extremen seitlichen Versatz zweier aufeinanderfolgender Wagen die Dichtwirkung durch Aufeinanderliegen der Bälge nicht beeinträchtigt.

Gegebenenfalls können die mit einem pneumatischen Druckmittel gefüllten Bälge durch einander gegenüberliegende Platten 12, 13 ersetzt sein, zwischen denen mechanische Federn 14 angeordnet sind (Fig. 3), wobei die hintere Platte 12 an der Wagenstirnseite 1 befestigt ist und die vordere Platte 13 mit einem abriebfesten Belag 15 versehen ist, so wie die vordere Stirnseite der Bälge mit einem abriebfesten Belag versehen oder abriebfest ausgebildet ist. An ihren Rändern sind die Platten 12, 13 durch verformbare Folienstreifen 16, 17 miteinander verbunden, so daß auch hier Rohre bestehen, die den Tunnelinnenraum gegen den Tunnelaußenraum isolieren. Fig. 3 vermittelt auch die Querschnittsform von gasgefüllten Bälgen der oben zuletzt beschriebenen Ausführungsform.

Bisher bei Schienenfahrzeugen übliche seitliche Puffer bzw. eine entsprechend wirkende Zug- und Druckkräfte übertragende Mittelpufferkupplung können vollständig entfallen. Gegebenenfalls können seitliche Puffer in die erfindungsgemäße Lösung integriert sein, indem sie in der bisherigen Anordnung vorgesehen und innerhalb der elastischen seitlichen Leisten 5, 6 unabhängig von deren Ausgestaltung integriert sind. Sie können dabei an der Innenseite der vorderen Stirnseiten der seitlichen Leisten anliegen oder die seitlichen Leisten können Fenster 18 aufweisen, in denen die Pufferplatten 19 in der Ebene der Leistenstirnseite liegen (Fig. 4). Diese Lösung erfordert bei gasgefüllten Bälgen eine besondere Abdichtung 20 zwischen Pufferplatten und Balgstirnseite, um den gasdichten Innenraum zu erhalten. Bei der Lösung nach Fig. 3 ist eine solche Dichtung nicht notwendig, allenfalls zweckmäßig. Die Lösung mit den bisher üblichen Puffern ist für den Zeitraum der Umrüstung eines Bahnsystemes auf die Erfindung oder dann zweckmäßig, wenn Bahnsysteme konventioneller und erfindungsgemäßer Ausrüstung für die Dauer miteinander kompatibel sein sollen.

**Patentansprüche**

1. Vorrichtung zur Übertragung der Längskräfte zwischen den einzelnen Gliedern eines Gelenkfahrzeuges, wobei die einzelnen Glieder durch eine Zugkräfte übertragende, mittlere Kupplung (3) unterhalb der horizontalen Ebene (4) einer Übergangseinrichtung zwischen den Fahrzeuggliedern zugfest miteinander verbunden sind und zur Übertragung von Druckkräften seitliche Puffer vorgesehen sind, die von ihnen aufgenommene Druckkräfte in tragende Teile der Fahrzeugglieder einleiten, dadurch gekennzeichnet, daß die seitlichen Puffer elastische, vertikal angeordnete Leisten (5, 6) sind, deren Länge zumindest etwa der Höhe der Fahrzeugglieder entspricht und deren Elastizität derart bemessen ist, daß eine flächige Berührung zwischen den Leisten zweier einander zugekehrter Fahrzeuggliederenden auch dann noch gegeben ist, wenn eine Abstandsvergrößerung zwischen den Fahrzeuggliederenden voll erreicht ist.

2. Vorrichtung nach Anspruch 1, dadurch gekennzeichnet, daß die beiden seitlichen Leisten (5, 6) an ihren oberen Enden durch eine entsprechende obere Querleiste (7) miteinander verbunden sind.

3. Vorrichtung nach Anspruch 1 oder 2, dadurch gekennzeichnet, daß die beiden seitlichen Leisten 5, 6) an ihren unteren Enden durch eine entsprechende untere Querleiste (8) miteinander verbunden sind, wobei die untere Querleiste zwischen Kupplung (3) und Übergangseinrichtung (4) oder unterhalb der Kupplung liegt.

4. Vorrichtung nach einem der Ansprüche 1 bis 3, dadurch gekennzeichnet, daß die Leisten (5 bis 8) Hohlprofile sind.

5. Vorrichtung nach Anspruch 4, dadurch gekennzeichnet, daß die Leisten aus je einer einen Gasraum umschließenden Haut aus elastischem, zumindest in dem Teil abriebfestem Material bestehen, der zum Zusammenwirken mit einer Gegenfläche bestimmt ist.

6. Vorrichtung nach Anspruch 5, dadurch gekennzeichnet, daß die jeweilige Haut einen geschlossenen Gasraum umschließt und die Gasräume der Leisten über Drosselstellen (11) miteinander verbunden sind.

7. Vorrichtung nach Anspruch 6, dadurch gekennzeichnet, daß der Innendruck des Gasraumes zwangsweise veränderbar ist.

8. Vorrichtung nach Anspruch 6, dadurch gekennzeichnet, daß jede Leiste einen in sich abgeschlossenen Gasraum mit regelbarem Innendruck aufweist.

9. Vorrichtung nach einem der Ansprüche 1 bis 8, dadurch gekennzeichnet, daß der Querschnitt der jeweiligen Leiste etwa rechteckig ist und die aufeinanderliegenden Leisten zweier einander zugekehrten Fahrzeuggliederstirnseiten in weitestgehend ebenen Flächen aus abriebfestem Material aufeinanderliegen.

10. Vorrichtung nach einem der Ansprüche 1 bis 9, vorzugsweise nach Anspruch 8, dadurch gekennzeichnet, daß die Haut mit Gummi beschichtetes Gewebe einschließt, auf dessen Stirnseite als äußerste Schicht ein abriebfestes Material aufgebracht ist.

11. Vorrichtung nach einem der Ansprüche 1 bis 3, dadurch gekennzeichnet, daß die Leisten (5 bis 8) aus zwei Platten (12, 13) bestehen, von denen die hintere (12) an der Fahrzeugstirnseite (1) eines Gelenkfahrzeuges befestigt ist, die vordere Platte (13) mit einem abrieb-Belag (15) versehen ist und zwischen den Platten mechanische Federn (14) angeordnet sind, wobei die Platten an den Rändern durch Folien (16, 17) aus verformbarem Material miteinander verbunden sind.

12. Anwendung einer Vorrichtung nach zumindest einem der Ansprüche 1 bis 11 bei einem Fahrzeug mit Seitenpuffern (19), wobei die Seitenpuffer mit ihren Pufferplatten an den Innenseiten der seitlichen, vertikalen Leisten (5, 6) anliegen oder in Fenstern (18) dieser Leisten liegen, zwischen deren Rand und dem Rand der jeweiligen Pufferplatte gegebenenfalls eine gasdichte Abdichtung (20) vorgesehen ist.

**Claims**

1. A system for transmitting longitudinal forces between the discrete elements of an articulated vehicle, the discrete elements being rigidly interconnected by a traction-transmitting central coupling (3) which is disposed below the horizontal plane (4) of a passageway means between the vehicle members, side buffers being provided which are adapted to transmit pressure forces, the buffers introducing the pressure forces they receive into bearing parts of the vehicle elements, characterised in that the side buffers are resilient vertical strips (5, 6) whose length corresponds at least substantially to the height of the vehicle elements and whose resilience is such that surface contact between the strip of two facing vehicle element ends remains effective despite an increase in the distance between such ends.

2. A system according to claim 1, characterised in that the two lateral strips (5, 6) are interconnected by way of their top ends by a corresponding top cross-strip (7).

3. A system according to claim 1 or 2, characterised in that the two lateral strips (5, 6) are interconnected by way of their bottom ends by a corresponding bottom cross-strip (8) disposed between the coupling (3) and the passageway means (4) or below the coupling.

4. A system according to any of claims 1-3, characterised in that the strips (5-8) are hollow section members.

5. A system according to claim 4, characterised in that each strip is in the form of a skin enclosing a gas chamber, such skin consisting of a resilient material which is abrasion-resistant at least in that part which is adapted to co-operate with a companion surface.

6. A system according to claim 5, characterised in that the skin extends around a closed gas chamber and the gas chambers of the strips are interconnected by way of restrictors (11).

7. A system according to claim 6, characterised in that the internal pressure of the gas chamber is variable automatically.

8. A system according to claim 6, characterised in that each strip has an enclosed gas chamber whose internal pressure is adjustable.

9. A system according to any of claims 1-8, characterised in that the cross-section of the strip is substantially rectangular and the engaging strips of two facing vehicle element ends engage with one another by way of substantially plane surfaces made of an abrasion-resistant material.

10. A system according to any of claims 1-9, preferably according to claim 8, characterised in that the skin encloses rubber-coated woven fabric having an abrasion-resistant material as outermost layer on its end face.

11. A system according to any of claims 1-3, characterised in that the strips (5-8) are in the form of two plates or panels or the like (12, 13), the rear plate (12) being secured to the vehicle end (1) of one articulated vehicle while the front plate (13) has an abrasion-resistant covering (15), mechanical springs (14) being disposed between the plates, the same being interconnected by way of their edges by deformable foils (16, 17).

12. The use of a system according to at least one of claims 1-11 in a vehicle having side buffers (19), the same engaging by way of their buffer plates with the insides of the lateral vertical strips (5, 6) or being disposed in windows (18) therein, gas-tight sealing means (20) possibly being provided between the strip edges and the edge of the associated buffer plate.

## Revendications

1. Dispositif de transmission des forces longitudinales entre les éléments individuels d'un véhicule articulé, les éléments individuels étant reliés entre eux de manière rigide en traction au moyen d'un accouplement (3) central transmettant les efforts de traction, disposé au-dessous du plan (4) horizontal d'un dispositif de jonction entre les éléments de véhicule et des tampons latéraux étant prévus pour transmettre les efforts de pression, tampons transmettant dans les parties porteuses des éléments de véhicule les efforts qu'ils reçoivent, caractérisé en ce que les tampons latéraux sont des bandes (5, 6) élastiques, disposées verticalement, dont la longueur correspond au moins approximativement à la hauteur des éléments de véhicules et dont l'élasticité est telle qu'il se produit encore un contact plat entre les bandes de deux extrémités d'éléments de véhicules tournées l'une vers l'autre lorsqu'une augmentation de l'écartement entre les extrémités d'éléments de véhicule a atteint son maximum.

2. Dispositif selon la revendication 1, caractérisé en ce que les deux bandes latérales (5, 6) sont reliées ensemble à leurs extrémités supérieures par une bande transversale (7) supérieure correspondante.

3. Dispositif selon la revendication 1 ou 2, caractérisé en ce que les deux bandes latérales (5, 6) sont reliées ensemble à leurs extrémités inférieures par une bande latérale (8) inférieure correspondante, la bande transversale inférieure étant située entre l'accouplement (3) et le dispositif de jonction (4) ou au-dessous de l'accouplement.

4. Dispositif selon l'une des revendications 1 à 3, caractérisé en ce que les bandes (5 à 8) sont des profilés creux.

5. Dispositif selon la revendication 4, caractérisé en ce que les bandes se composent chacune d'une peau entourant une enceinte de gaz, qui est en un matériau élastique résistant à l'usure, au moins pour la partie destinée à coopérer avec une contre-surface.

6. Dispositif selon la revendication 5, caractérisé en ce que chaque peau comprend une enceinte de gaz fermée et que les enceintes de gaz des bandes sont reliées ensemble par des points d'étranglement (11).

7. Dispositif selon la revendication 6, caractérisé en ce que la pression interne de l'enceinte de gaz est modifiable de manière forcée.

8. Dispositif selon la revendication 6, caractérisé en ce que chaque bande présente une enceinte de gaz délimitée en elle-même, à pression interne réglable.

9. Dispositif selon l'une des revendications 1 à 8, caractérisé en ce que la section de chaque bande est approximativement rectangulaire et que les bandes situées l'une sur l'autre de deux faces frontales d'éléments de véhicule tournées l'une vers l'autre appuient l'une sur l'autre dans des faces pratiquement planes en matériau résistant à l'usure.

10. Dispositif selon l'une des revendications 1 à 9, de préférence selon la revendication 8, caractérisé en ce que la peau comprend un tissu recouvert de caoutchouc, sur le côté frontal duquel un matériau résistant à l'usure est appliqué en couche extérieure.

11. Dispositif selon l'une des revendications 1 à 3, caractérisé en ce que les bandes (5 à 8) se composent de deux plaques (12, 13) dont la plaque arrière (12) est fixée sur la face frontale (1) de véhicule d'un véhicule articulé, la plaque avant (13) étant pourvue d'un revêtement (15) résistant à l'usure, et des ressorts (14) mécaniques étant disposés entre les plaques, les plaques étant reliées sur les bords par des feuilles (16, 17) de matériau déformable.

12. Application d'un dispositif selon au moins l'une des revendications 1 à 11, pour un véhicule à tampons latéraux (19), les tampons latéraux reposant avec leurs plaques de tampon sur les côtés intérieurs des bandes (5, 6) latérales et verticales ou dans des fenêtres (18) de ces bandes, entre le bord desquelles et le bord de chaque plaque de tampon, il est prévu, le cas échéant, un joint d'étanchéité (20) étanche aux gaz.

Fig.1

Fig. 2

Fig.3

Fig.4